# EUROPÄISCHE PATENTSCHRIFT

(11) **EP 1 505 407 B1**
(45) Veröffentlichungstag und Bekanntmachung des Hinweises auf die Patenterteilung: **27.09.2006**
(21) Anmeldenummer: 04016930.2
(22) Anmeldetag: 19.07.2004
(51) Int. Cl.: G01S 13/87

(54) **Luftverteidigungssystem**
Air-defense system
Système de défense aérienne

(30) Priorität: 08.08.2003 DE 10336416
(43) Veröffentlichungstag der Anmeldung: 09.02.2005
(73) Patentinhaber: EADS Deutschland GmbH, 85521 Ottobrunn (DE)
(72) Erfinder: Edel, Hermann, 89195 Steig (DE); Bil, Ryszard, 89584 Ehingen (DE); Strecker, Andreas, 73066 Uhingen (DE)
(74) Vertreter: Meel, Thomas

(56) Entgegenhaltungen:
- US-B1- 6 603 421
- CAREY D R ET AL: "The Patriot Radar in Tactical Air Defense" SKOLNIK M, RADAR APPLICATIONS, IEEE PRESS SELECTED REPRINT SERIES, 1987, Seiten 185-191, XP002306278 NEW YORK, US
- HERPER J C ET AL: "COMBINED RADAR AND ILLUMINATOR FOR SEA SKIMMERS (CRISS)" PROCEEDINGS OF THE 1996 IEEE NATIONAL RADAR CONFERENCE. ANN ARBOR, MAY 13 - 16, 1996, PROCEEDINGS OF THE 1996 NATIONAL RADAR CONFERENCE, NEW YORK, IEEE, US, 13. Mai 1996 (1996-05-13), Seiten 243-248, XP000634949 ISBN: 0-7803-3147-8
- WILDEN H ET AL: "THE CROW'S NEST ANTENNA - EXPERIMENTAL RESULTS" INTERNATIONAL RADAR CONFERENCE. ARLINGTON, MAY 7 - 10, 1990, NEW YORK, IEEE, US, 7. Mai 1990 (1990-05-07), Seiten 280-285, XP000131191

## Beschreibung

Die Erfindung betrifft ein Luftverteidigungssystem.

Bei früheren Luftverteidigungssystemen wurden die Systemfunktionen durch separate Radarsysteme unterstützt, wie Rundsuchradar, Feuerleitradar und Beleuchterradar. Um die Anzahl der verschiedenen Radarsysteme zu reduzieren, werden inzwischen Multifunktionsradare realisiert, die verschiedene Radarfunktionen auf ein Radarsystem vereinen. Die Ausführung der verschiedenen Funktionen erfolgt bei diesen Multifunktionsradaren nach einer Prioritätenregelung. Im Falle einer Zielbekämpfung haben die Unterstützungsfunktionen für das Waffensystem (Uplink zur Nachsteuerung von Lenkflugkörpern, Zielbeleuchtung) Priorität. Dadurch wird die Leistung und Verfügbarkeit anderer Funktionen, wie Zielsuche und Zielverfolgung reduziert, was operationelle Nachteile beinhaltet.

Aus Herper J C et al.: "Combined Radar and Illumination For Sea Skimmers (CRISS)" in Proceedings of the 1996 IEEE National Radar Conference, Ann Arbor, May 13-16, 1996, Proceedings of the 1996 National Radar Conference, New York, IEEE, US, 13. Mai 1996 (1996-05-13), Seiten 243-248, XP000634949, ISBN: 0-7803-3147-8 ist ein Luftverteidigungssystem bekannt, dessen Funktionen auf zwei Subsysteme verteilt sind, wobei die beiden Subsysteme baulich integriert sind und wobei das erste Subsystem als Rundsuchradar für die Zielsuche und Zielverfolgung ausgelegt ist, und das zweite Subsystem zur Zielbeleuchtung zur Unterstützung der Zielsteuerung von Lenkflugkörpern ausgebildet ist.

Es ist Aufgabe der Erfindung, ein Luftverteidigungssystem in kompakter Bauart zu schaffen, mit der eine hemisphärische Raumabdeckung unter Einsatz möglichst weniger mechanischer Komponenten realisiert wird.

Diese Aufgabe wird mit dem Luftverteidigungssystem nach Patentanspruch 1 gelöst. Vorteilhafte Ausführungen der Erfindung sind Gegenstand eines weiteren Anspruchs.

Das erfindungsgemäße Luftverteidigungssystem umfasst zwei baulich integrierte Subsysteme. Im Falle einer Zielbekämpfung wird über ein Rundsuchradar die Zielsuche und Zielverfolgung ohne Einschränkung sichergestellt, während ein zweites Subsystem für die Nachsteuerung von Lenkflugkörpern (Lenkflugkörper- Uplink) und/oder Zielbeleuchtung übernimmt. Das zweite Subsystem kann darüber hinaus auch als ergänzendes Radar eingesetzt werden.

Jedes der beiden Subsysteme umfasst die üblichen Komponenten eines Radars, insbesondere Antennen, Einheiten für Senden, Empfangen, Signalerzeugung, Signalverstärkung, Signalverarbeitung etc. Die beiden Subsysteme sind jedoch als physikalische Einheit integriert, was mit dem Integrationsvorteil von Multifunktionsradaren vergleichbar ist.

Erfindungsgemäß wird die bauliche Integration der beiden Subsysteme derart realisiert, dass auf einem kuppelförmigen Radom, welches die Antennen des ersten Subsystems abdeckt, das zweite Subsystem installiert ist. Das kuppelförmige Radom des ersten Subsystems dient somit als mechanische Basis für das zweite Subsystem. Die Radome können vorteilhaft aus frequenzselektiven Materialien hergestellt werden, um die Eigensignatur (Radarrückstreuquerschnitt, Infrarot, optisch, akustisch) der beiden Subsysteme zu reduzieren.

Durch die beschriebene mechanische Anordnung wird eine gegenseitige Abschattung der Antennen der Subsysteme vermieden. Außerdem wird eine einfache Schnittstelle zur Plattform, z.B. Schiff, erreicht.

Für eine Anwendung auf Schiffen kann die Antennengruppe des erfindungsgemäßen Luftverteidigungssystem auf einem einzelnen Mast installiert werden.

Durch die Erfindung werden die oben beschriebenen operationellen Nachteile eines Multifunktionsradars vermieden, aber die Vorteile aus dessen kompakter Bauweise beibehalten.

Das erfindungsgemäße System kann in verschiedenen Konfigurationen realisiert werden. Das Antenne des Rundsuchradars kann z.B. ein oder mehrere Antennenflächen für Primärradar aufweisen. Im Falle von zwei Antennenflächen können diese z.B. in einer so genannten Janus-Konfiguration (back-to-back-Konfiguration) angeordnet werden, wodurch die Raumabtastungsfolge vorteilhafter gestaltet werden kann.

Des weiteren kann das erfindungsgemäße System eine IFF-Identifizierungseinheit (IFF: Identification of Friend or Foe) mit Interrogator-Antenne und Transponder-Antenne umfasssen. Interrogator-Antenne und/oder Transponder-Antenne können in einer vorteilhaften Ausführung mit der Antenne oder Antennengruppe des ersten Radarsubsystems baulich integriert sein. Dies kann z.B. derart realisiert werden, dass eine oder beide IFF-Antennen innerhalb des kuppelförmigen Radoms, welches die Antennen des ersten Radarsubsystems abdeckt, montiert sind.

Die Antenne des zweiten Subsystems ist als so genanntes Volumenarray ausgeführt, bei dem eine Mehrzahl von Strahlern in einem Kugelvolumen angeordnet sind.

Die Strahlerzeugung und Strahlschwenkung erfolgt dabei mittels den einzelnen Strahlern zugeordneten Transmit/Receive-Modulen rein elektronisch ohne mechanische Bewegung, so dass zu jedem Zeitpunkt eine hemisphärische Raumabdeckung erreicht wird.

Die Erfindung wird im Folgenden anhand eines Ausführungsbeispiels und unter Bezugnahme auf Zeichnungen näher erläutert. Es zeigen:
- Fig. 1: ein erfindungsgemäßes Luftverteidigungssystem,

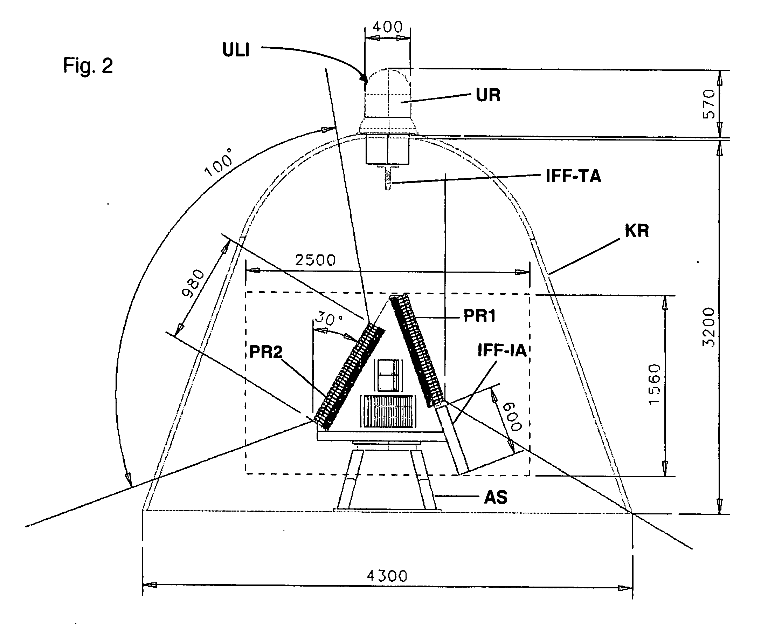

- Fig. 2: ein Schnitt durch die über Deck befindlichen Komponenten des erfindungsgemäßen Luftverteidigungssystems nach Fig. 1, beispielhafte Abmessungen sind angegeben;
- Fig. 3: eine Antenne für eines der beiden Subsysteme (Volumenarray).

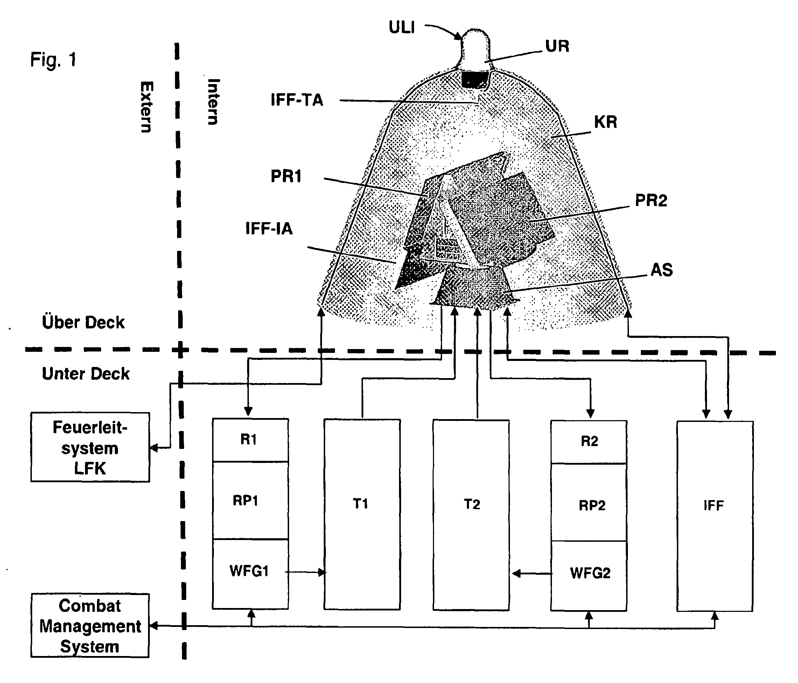

Fig. 1 zeigt ein erfindungsgemäßes Luftverteidigungssystem für eine Anwendung auf einem Schiff. Die oberhalb der horizontalen gestrichelten Linie dargestellten Komponenten befinden sich oberhalb des Schiffsdecks, die unterhalb dargestellten Komponenten befinden sich unterhalb des Schiffsdecks.

Die Komponenten des erfindungsgemäßen Luftverteidigungssystems sind rechts der vertikalen Linie dargestellt. Links der vertikalen Linie sind Systeme dargestellt, mit denen das erfindungsgemäße Multifunktionsradarsystem zusammenarbeitet.

Man erkennt ein kuppelförmiges Radom KR, mit dem die Antenne des Rundsuchradars (erstes Subsystem) zum Schutz gegen äußere Einflüsse abgedeckt sind. Die Antenne besteht in dieser Ausführung aus zwei Antennenflächen PR1, PR2, angeordnet in Januskonfiguration. Die Antennenflächen sind drehbar gelagert auf einem Antennensockel AS angeordnet, mit dem eine mechanische Strahlschwenkung der Antenne in Azimut realisiert wird. Die Strahlschwenkung in Elevation erfolgt elektronisch durch Phasensteuerung der Antennenelemente. Selbstverständlich sind auch Ausführungen möglich, bei der die Strahlschwenkung auf rein elektronischem Wege z.B. mittels phasengesteuerter Gruppenantennen erfolgt.

Die sonstigen Komponenten des Rundsuchradars, insbesondere Sender T1,T2, Empfänger R1,R2, Einheiten zur Signalerzeugung WFG1, WFG 2 und Signalverarbeitung RP1,RP2 für die beiden Antennenflächen befinden sich unterhalb des Decks.

Unter Deck befindet sich außerdem eine IFF-Identifizierungseinheit IFF, die mit den beiden über Deck befindlichen zugehörigen IFF-Antennen (Transponder-Antenne IFF-TA, Interrogator-Antenne IFF-IA) verbunden ist. In der gezeigten Ausführung ist die Interrogator-Antenne IFF-IA zusammen mit den Antennen des Rundsuchradars PR1, PR2 auf dem drehbaren Sockel AS angeordnet. Die Transponder-Antenne IFF-TA ist innerhalb des kuppelförmigen Radoms KR angeordnet, und zwar auf der Unterseite des Bodens des zweiten Subsystems ULI.

Rundsuchradar sowie die IFF-Identifizierungseinheit stehen in Verbindung mit einem Combat Mangement System, dass die gesamten Sensoren und Kommunikationseinrichtungen verbindet und eine effektive Gefechtsführung ermöglicht.

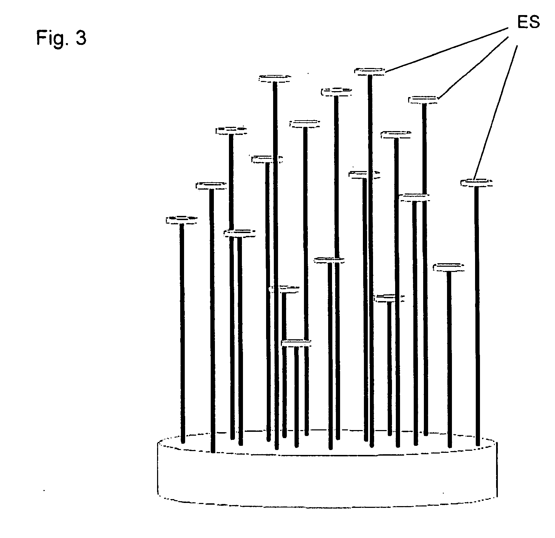

Auf dem kuppelförmigen Radom KR des Rundsuchradars ist das zweite Subsystem ULI angeordnet. Es wird ebenfalls von einem Radom UR abgedeckt. Unter dem Radom UR befinden sich in der gezeigten Ausführung neben der Antenne auch die sonstigen Komponenten des Radarsubsystems zum Senden, Empfangen, Signalerzeugung, Signalverstärkung, Signalverarbeitung. Als Antenne wird hierbei ein Volumenarray (Fig. 3) eingesetzt werden, bei dem eine Vielzahl von Einzelstrahlern ES in einem Kugelvolumen angeordnet sind. Den Einzelstrahlern ES ist jeweils ein Transmit/Receive-Modul (in Fig. 3 nicht dargestellt) zugeordnet, mit der die HF-Speisung der Einzelstrahler erfolgt. In einer typischen Ausführung umfasst die Antenne 2048 Einzelstrahler in einem Kugelvolumen. Die Einzelstrahler können z.B. als magnetischer Dipol nach dem Prinzip einer Mikrostreifenleiterantenne ausgebildet sein. Die Strahlschwenkung kann ohne mechanische Bewegung auf rein elektronischem Weg erfolgen, wobei die volle hemisphärische Volumenabdeckung sichergestellt werden kann.

Das beschriebene zweite Subsystem ist in dieser Ausführung als so genanntes Lenkflugkörper-Uplink-System ausgebildet zur Übertragung von Daten zur Lenkung der schiffseigenen Luftabwehr-Lenkflugkörper. Es ist mit dem Feuerleitsystem des Lenkflugkörpers verbunden. Mittels dieses Uplink-Systems erfolgt abhängig von der momentanen Flugbahn des Ziels eine Nachsteuerung des Lenkflugkörpers. Dies geschieht meist in der mittleren Flugphase des Lenkflugkörpers, bevor die Endphase des Flugs eingeleitet wird (midcourse guidance). In der Endphase erfolgt die Steuerung des Lenkflugköpers meist autonom durch den Lenkflugkörper selbst.

Das zweite Subsystem kann alternativ oder zusätzlich für die Zielbeleuchtung (target illumination) eingesetzt werden. Diese wird für solche Lenkflugkörper eingesetzt, welche in der Endphase des Zielanflugs eine Radarreflexion vom Ziel benötigen, um das Ziel präzise ansteuern und treffen zu können.

Alternativ oder zusätzlich zu den bisher erwähnten Funktionen kann das zweite Subsystem auch als ergänzendes Überwachungsradar eingesetzt werden. Dies ist besonders vorteilhaft, wenn die beiden Subsysteme unterschiedliche Frequenzbänder benützen, um Einflüsse der Radarausbreitung und gegnerischer Störmaßnahmen zu minimieren. Ferner ermöglicht dieses Subsystem Radarfunktionen für die Zielklassifizierung, die eine hohe Verweildauer der Radarstrahlung auf dem Ziel erfordern.

Die in der Fig. 1 gezeigten Antennen PR1,PR2, IFF-IA,IFF-TA des ersten Subsystems und der IFF-Einheit können zusammen mit dem auf dem kuppelförmigen Radom KR des Rundsuchradars angeordneten zweiten Subsystems ULI vorteilhaft auf einem Mast angeordnet werden.

## Patentansprüche

1. Luftverteidigungssystem, dessen Funktionen auf mindestens zwei Subsysteme verteilt sind, wobei die beiden Subsysteme baulich integriert sind und wobei das erste Subsystem als Rundsuchradar für die Zielsuche und Zielverfolgung ausgelegt ist, und das zweite Subsystem (ULI) für mindestens einer der folgenden Funktionen ausgelegt ist:
- Nachsteuerung von Lenkflugkörpern,
- Zielbeleuchtung zur Unterstützung der Zielsteuerung von Lenkflugkörpern
- ergänzendes Überwachungsradar,
- Zielklassifizierung,
**dadurch gekennzeichnet, dass** die bauliche Integration der Subsysteme derart ausgebildet ist, dass das erste Subsystem ein kuppelförmiges Radom (KR) zur Antennenabdeckung umfasst und das zweite Subsystem (ULI) auf dem kuppelförmigen Radom (KR) des ersten Systems angeordnet ist, wobei die Antenne des zweiten Subsystems (ULI) als Volumenarray mit elektronischer Strahlschwenkung ausgebildet ist.

2. Luftverteidigungssystem nach Anspruch 1, **dadurch gekennzeichnet, dass** zusätzlich eine IFF-Identifizierungseinheit (IFF) mit Interrogator-Antenne (IFF-IA) und Transponder-Antenne (IFF-TA) vorhanden ist, wobei Interrogator-Antenne (IFF-IA) und/oder Transponder-Antenne (IFF-TA) mit der Antenne (PR1,PR2) des ersten Subsystems baulich integriert sind.

## Claims

1. Air-defence system, whose functions are distributed between at least two subsystems, with the two subsystems being physically integrated and with the first subsystem being in the form of a surveillance radar for target search and target tracking, and with the second system (ULI) being designed for at least one of the following functions:
- post-launch control of guided missiles,
- target illumination in order to support target steering of guided missiles,
- supplementary monitoring radar,
- target classification,
**characterized in that** the physical integration of the subsystems is designed such that the first subsystem comprises a radome (KR) in the form of a dome in order to cover the antenna, and the second subsystem (ULI) is arranged on the radome (KR), which is in the form of a dome, of the first system, with the antenna of the second subsystem (ULI) being in the form of a volume array with electronic beam scanning.

2. Air-defence system according to Claim 1, **characterized in that** an IFF identification unit (IFF) with an interrogator antenna (IFF-IA) and a transponder antenna (IFF-TA) is additionally provided, with the interrogator antenna (IFF-IA) and/or transponder antenna (IFF-TA) being physically integrated with the antenna (PR1, PR2) of the first subsystem.

## Revendications

1. Système de défense aérienne dont les fonctions sont distribuées sur au moins deux sous-systèmes, les deux sous-systèmes étant intégrés par la construction et le premier sous-système étant conçu sous la forme d'un radar panoramique de surveillance pour la recherche de cibles et le suivi de cibles et le deuxième sous-système (ULI) étant conçu pour au moins l'une des fonctions suivantes :
- poursuite des missiles guidés,
- éclairage de la cible pour assister le contrôle vers la cible des missiles guidés,
- radar de surveillance complémentaire
- classification des cibles,
**caractérisé en ce que** l'intégration par la construction des sous-systèmes est configurée de telle sorte que le premier sous-système comprend un radôme en forme de coupole (KR) pour recouvrir l'antenne et le deuxième sous-système (ULI) est disposé sur le radôme en forme de coupole (KR) du premier sous-système, l'antenne du deuxième sous-système (ULI) étant réalisée sous la forme d'un réseau volumique avec pivotement électronique du rayon.

2. Système de défense aérienne selon la revendication 1, **caractérisé en ce qu'**il existe en plus une unité d'identification IFF (IFF) avec antenne d'interrogateur (IFF-IA) et antenne de transpondeur (IFF-TA), l'antenne d'interrogateur (IFF-IA) et/ou l'antenne de transpondeur (IFF-TA) étant intégrées par la construction avec l'antenne (PR1, PR2) du premier sous-système.
